# EUROPEAN PATENT SPECIFICATION

(11) **EP 3 945 407 B1**
(45) Date of publication and mention of the grant of the patent: **14.08.2024**
(21) Application number: 21178768.4
(22) Date of filing: 10.06.2021
(51) Int. Cl.: G06F 3/06

(54) **SYSTEMS AND METHODS FOR PROCESSING COPY COMMANDS**
SYSTEME UND VERFAHREN ZUR VERARBEITUNG VON KOPIEBEFEHLEN
SYSTÈMES ET PROCÉDÉS DE TRAITEMENT DE COMMANDES DE COPIE

(30) Priority: 28.07.2020 US 202063057726 P; 17.09.2020 US 202017024598; 02.10.2020 US 202017062467
(43) Date of publication of application: 02.02.2022
(73) Proprietor: Samsung Electronics Co., Ltd., Suwon-si, Gyeonggi-do 16677 (KR)
(72) Inventor: VIKRAM SINGH, Fnu, Fremont, CA 94538 (US)
(74) Representative: Kuhnen & Wacker Patent- und Rechtsanwaltsbüro PartG mbB

(56) References cited:
- US-A1- 2017 262 176
- US-A1- 2019 095 123

## Description

### FIELD

One or more aspects of embodiments according to the present disclosure relate to storage devices, and more particularly to processing commands that are used for accessing the storage devices.

### BACKGROUND

A host computing device may utilize a storage interface protocol to access a non-volatile storage device, such as, for example, a solid state drive (SSD). The non-volatile storage device may include a controller for processing a command that is generated using the protocol. As the protocol grows, more and more features (e.g. commands) may be added to the protocol. A legacy SSD may not be able to process the added features without having to redesign the SSD controller. Thus, it is desirable to have an SSD controller that is capable of processing commands from the host, without having to redesign the SSD controller, even when commands are added to the protocol.

US 2017/262176 A1 discloses: A storage system receives, from a host, a data copy command including an address of a copy source block, an address of a copy start page in the copy source block, an address of a copy destination block, an address of a transfer start page in the copy destination block, management data indicating validity/invalidity of data in each page, and a termination condition. The storage system starts, beginning with the copy start page, a data copy operation of copying valid data in the copy source block to a copy destination region of the copy destination block beginning with the transfer start page of the copy destination block, and skipping copying of invalid data in the copy source block.

US 2019/095123 A1 discloses: A method for internal data movements of a flash memory device, performed by a host, at least including the following steps: generating an internal movement command when detecting that a usage-status for an I/O channel of a solid state disk (SSD) has met a condition; and providing the internal movement command to direct the SSD to perform an internal data-movement operation in the designated I/O channel.

### SUMMARY

Embodiments of the present disclosure include a method for processing a copy command from a host to a storage device. A first controller of the storage device receives the copy command from the host via a first queue. The copy command includes a first source address and a first destination address. One or more processors of the storage device generate, based on the copy command, a first read command and a first write command. The one or mor processors of the storage device submit the first read command and the first write command to a second controller of the storage device via a second queue. The second controller retrieves and processes the first read command and the first write command from the second queue. The storage device reads, based on the processing of the first read command, data stored in a first location of a storage media of the storage device associated with the first source address. The storage device writes, based on the processing of the first write command, the data to a second location of the storage media associated with the first destination address. The first controller transmits a signal to the host for indicating completion of the copy command. The data stored in the first location of the storage media includes metadata having a first portion and a second portion, wherein the writing of the data includes: writing the first portion of the metadata to a third location of the storage media associated with the first destination address; generating, by the storage device, a third portion of the metadata based on the size of the logical block data of the first destination address; and writing, by the storage device, the third portion of the metadata in the storage media instead of the second portion of the metadata. The second portion of the metadata includes data protection information. The first source address is associated with a first logical space configured to store a logical block of data of a first size, and the first destination address is associated with a second logical space configured to store a logical block of data of a second size different from the first size.

According to one embodiment, the first source address is associated with a first logical space of the storage device identified by a first identifier, and the first destination address is associated with a second logical space of the storage device identified by a second identifier.

According to one embodiment, the copy command includes a second destination address, wherein the writing the data includes writing a first portion of the data to the second location of the storage media associated with the first destination address, and writing a second portion of the data to a third location of the storage media associated with the second destination address.

According to one embodiment, the method further includes skipping reading of the second portion of the metadata based on the processing of the first read command.

According to one embodiment, the method further includes skipping writing of the second portion of the metadata based on the processing of the first write command.

According to one embodiment, the copy command is associated with a second source address. The method further comprises: generating, by the storage device, based on the copy command, a second read command; submitting, by the storage device, the second read command to the second controller of the storage device via the second queue; retrieving and processing, by the second controller, the second read command from the second queue; and reading, by the storage device, based on the processing of the second read command, data stored in a third location of the storage device associated with the second source address, wherein the processing of the second read command by the second controller is concurrent with the processing of the first write command.

According to one embodiment, the storage device is a non-volatile storage device, and the first controller and the second controller adhere to a non-volatile memory express (NVMe) protocol.

According to one embodiment, the method further comprises submitting, by the second controller, a first completion status to a first completion queue.

According to one embodiment, the transmitting of the signal includes submitting a second completion status to a second completion queue based on the submitting of the first completion status to the first completion queue.

Embodiments of the present disclosure also include a storage device comprising a storage media and one or more processors coupled to the storage media. The one or more processors are configured to respectively: receive, via a first controller and a first queue, a copy command from a host, wherein the copy command includes a first source address and a first destination address; generate, based on the copy command, a first read command and a first write command; submit the first read command and the first write command to a second controller via a second queue; retrieve and process, via the second controller, the first read command and the first write command from the second queue; read, based on the processing of the first read command, data stored in a first location of the storage media associated with the first source address; write, based on the processing of the first write command, the data to a second location of the storage media associated with the first destination address; and transmit, via the first controller, a signal to the host for indicating completion of the copy command. The data stored in the first location of the storage media includes metadata having a first portion and a second portion, wherein in writing the data, the one or more processors are further configured to: write the first portion of the metadata to a third location of the storage media associated with the first destination address; generate a third portion of the metadata based on the size of the logical block data of the first destination address; and write the third portion of the metadata in the storage media instead of the second portion of the metadata. The second portion of the metadata includes data protection information. The first source address is associated with a first logical space configured to store a logical block of data of a first size, and the first destination address is associated with a second logical space configured to store a logical block of data of a second size different from the first size.

As a person of skill in the art should recognize, embodiments of the present disclosure allow the processing of commands and/or extensions by a legacy storage device. The command may be a copy command between two addresses in a same namespace having a same logical block address (LBA) format, and/or between addresses in two namespaces having different LBA formats/sizes with multiple destination ranges. The separating of the copy command into internal read and write commands that may be processed concurrently, may lead to better performance of the storage device, and/or reduction in processing overhead.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 is a block diagram of a data storage and retrieval system according to one embodiment;
FIG. 2 is a conceptual layout diagram of various modules for submitting and processing storage interface commands according to one embodiment;
FIG. 3 is a layout block diagram of an internal command stored as a submission queue entry (SQE) in an internal submission queue according to one embodiment;
FIG. 4 is a flow diagram for processing a dataset management (DSM) command for deallocating (unmapping) a given set of logical block address ranges from a given namespace according to one embodiment;
FIG. 5 is a conceptual block diagram of a format of a logical block, according to one embodiment within the scope of the appended claims;
FIGS. 6A and 6B are flow diagrams for processing a copy command submitted by a host to an external submission queue, according to one embodiment within the scope of the appended claims;
FIG. 7 is a more detailed block diagram of components of the storage device for processing internal read and write commands associated with a copy command, according to one embodiment;
FIGS. 8A-8C are conceptual layout diagrams of various buffers invoked for copying data from a source namespace to a destination namespace according to one embodiment;
FIGS. 9A-9B are conceptual layout diagrams of various buffers invoked for copying data from multiple LBA ranges of a source namespace, to a single LBA range of a destination namespace, where both the source and destination namespaces have the same LBA format, according to one embodiment;
FIGS. 10A-10B are conceptual layout diagrams of various buffers invoked for copying data from multiple LBA ranges of a source namespace, to a plurality of LBA ranges of a destination namespace, where the source and destination namespaces have different LBA formats, according to one embodiment within the scope of the appended claims; and
FIGS. 11A-11B are conceptual layout diagrams of buffers and SGL tables used for copying data in one source LBA range of one namespace, to a destination LBA range of another namespace, wherein the source and destination LBA ranges have a format similar to the format of the source and destination LBA ranges in FIGS. 10A-10B, according to one embodiment.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

A host computing device may utilize a communication protocol to access a non-volatile storage device, such as, for example, a solid state drive (SSD). The non-volatile storage device may include a controller for processing a command that is generated using the protocol. As the protocol grows, more and more features (e.g. commands) may be added to the protocol. A legacy SSD may not be able to process the added features without having to redesign the SSD controller. Thus, it is desirable to have an SSD controller that is capable of processing commands from the host, without having to redesign the SSD controller, even when commands are added to the protocol.

In general terms, embodiments of the present disclosure are directed to a storage device configured to process a command from a host, that adheres to a communication protocol. The communication protocol may be, for example, a non-volatile memory express (NVMe) protocol, although embodiments of the present disclosure are not limited thereto, and may extend to other protocols as will be appreciated by a person of skill in the art.

In one embodiment, the command from the host is decomposed into one or more internal commands for executing by the storage device. The storage device may include an internal controller configured to fetch and execute the one or more internal commands. In one embodiment, no communication path is set up between the host and the internal controller. Thus, the internal controller is not exposed to the host.

In one embodiment, the host submits the host command to an external submission queue exposed to the host, and associated with the storage device, using an interface such as, for example, an NVMe Interface. An external controller of the storage device may fetch/obtain the host command, and pass the fetched command to the storage device's processor for generating internal commands. The internal commands may be submitted to one or more internal submission queues. In one embodiment, the internal submission queues and the internal controller are unexposed (e.g. hidden) to the host.

The internal controller may fetch/obtain the internal commands, and dispatch them for execution by the processor as standard commands adhering to the communication protocol (e.g. NVMe protocol), or vendor specific commands, as if the commands were originating from the host. In one embodiment, the internal commands are fetched/obtained and executed concurrently with one another (e.g. in parallel) by the storage device. The terms concurrently and in parallel may mean at substantially the same time, at a rate that is faster than sequential processing, and/or the like.

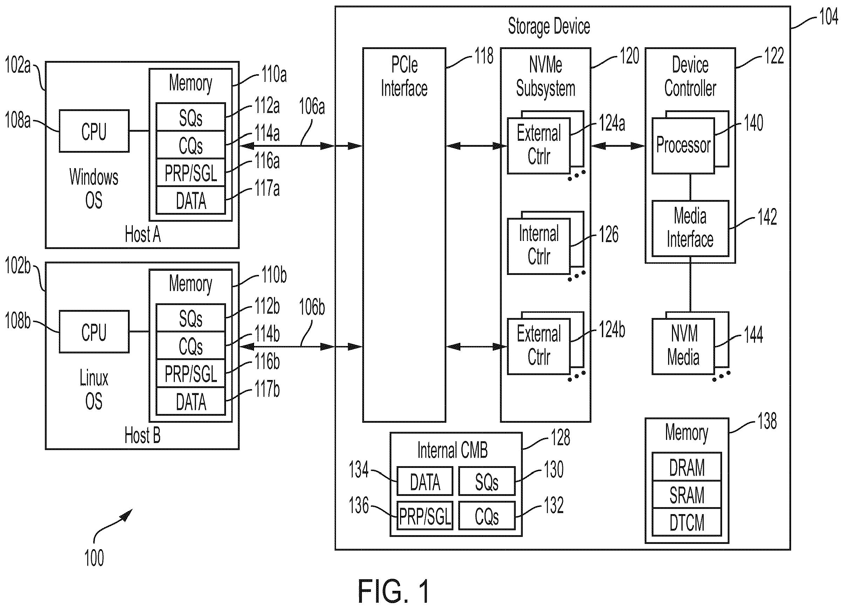

FIG. 1 is a block diagram of a data storage and retrieval system 100 according to one embodiment. The system includes one or more hosts 102a-102b (collectively referenced as 102), configured with the same or different operating systems. The one or more host 102 may be coupled to a data storage device 104 over a storage interface bus 106a, 106b (collectively referenced as 106). The storage interface bus 106 may be, for example, a Peripheral Component Interconnect Express (PCIe) bus. In one embodiment, the hosts 102 transfer and receive data from the data storage device 104 over the storage interface bus 106, using a storage interface protocol. The storage interface protocol may be the NVMe protocol as described in the March 9, 2020, NVM Express base specification revision 1.4a (or prior or future revisions) available at http://nvmexpress.org, the content of which is incorporated herein by reference. The NVMe protocol is used as an example for purposes of describing the present embodiments. A person of skill in the art should understand, however, that the various embodiments will extend to other current or future storage interface protocols similar to the NVMe protocol, without departing from the scope of the inventive concept.

The host 102 may be a computing device having a processor 108a,108b (collectively referenced as 108) that is configured to process data. The processor 108 may be a general purpose central processing unit (CPU), application specific integrated circuit (ASIC), field programmable gate array (FPGA), or any other form of processing unit configured with software instructions, microcode, and/or firmware.

In one embodiment, the processor 108 is coupled to a host memory space 110a, 110b (collectively referenced as 110). The host memory space 110 may be a static random access memory (SRAM), dynamic random access memory (DRAM), and/or the like. An application program may be stored in the host memory space 110 to be executed by the processor 108. The application may request storage or retrieval of data to and from the storage device 104. The application may generate an output based on the storing or retrieval of data. The output may be, for example, displaying retrieved data on a display device. In one embodiment, the use of internal commands by the storage device 104 to process requests from the application allow the requests to be processed faster and with less overhead.

The host memory space 110 may also store one or more external submission queues (SQs) 112a, 112b (collectively referenced as 112), and one or more external completion queues (CQs) 114a, 114b (collectively referenced as 114). The host 102 may use the external submission queues 112 to submit storage interface commands for execution by the storage device 104, and use the external completion queues 114 to receive completion messages from the storage device 104 after the commands have been executed. In some embodiments, the external submission and completion queues 112, 114 are included in a controller memory buffer (CMB) of the storage device 104 instead of (or in addition to) the host memory space 110. Thus, a reference to the host memory space 110 may be understood to include a reference to the CMB. In either scenario, the external submission and completion queues 112, 114 are exposed to, and accessible by, the host.

In one embodiment, the host memory space 110 stores Physical Region Page (PRP)/Scatter Gather List (SGL) entries 116a, 116b (collectively referenced as 116) and other data 117a, 117b (collectively referenced as 117). For example, the PRP/SGL entries 116 may describe physical memory locations of the host memory space 110, for writing data read from the storage device 104 for an NVMe read command, and for reading data to be written to the storage device 104 for an NVMe write command. For certain storage interface commands, logical block address (LBA) ranges may be stored as data 117 in the host memory space, instead of including the ranges in the command itself. An example of such a command is a dataset management deallocate command, which may be used to deallocate/unmap the LBA ranges provided by the host.

The storage device 104 may be a non-volatile storage device such as, for example, a solid state drive (SSD). The storage device 104 may include a communications interface 118, NVMe subsystem 120, and device controller 122. Although the NVMe subsystem 120 and device controller 122 are depicted as separate modules, it should be understood that the functionality of the NVMe subsystem 120 and the device controller 122 may also be incorporated as a single module. In one embodiment, the communications interface 118 includes PCIe ports and endpoints that enable ingress communications from the host 102 to the storage device 104, and egress of communications from the storage device 104 to the host 102.

The NVMe subsystem 120 may include, without limitation, one or more external controllers 124, 124b (collectively referenced as 124) and one or more internal controllers 126. The external and internal controllers 124, 126 may be implemented via one or more processors such as, for example, an application-specific integrated circuit (ASIC). In one embodiment, the one or more external controllers 124 are exposed to the host via the communications interface 118 (eg., PCIe interface), and are invoked for handling queue operations of the external submission and completion queues 112, 114. For example, a particular external controller 124 may fetch a storage interface command in a particular external submission queue 112, and place a completion status in the corresponding external completion queue 114 based on status of the requested command (e.g. indication that the requested command has been completed).

In one embodiment, a particular external controller 124 is associated with one or more of the namespaces. In this regard, the logical space of the storage device 104 may be split into the one or more logical spaces/namespaces, each namespace being identified by a unique namespace ID (NSID). For example, assuming a 1TB storage device that uses 4K logical blocks, three namespaces may be allocated with the following capacity: 512GB, 256GB, and 256GB. A command submitted by the host 102 may be directed to a specific namespace that is identified via the NSID.

In one embodiment, the one or more internal controllers 126 are unexposed to (e.g. hidden), and inaccessible by, the host 102. In this regard, no communication interface (e.g. PCIe interface) is provided between the host 102 and the internal controllers 126. The internal controller 126 may, according to one embodiment, mimic the functionality of the external controller 124. In this regard, the internal controller 126 may interact with the device controller 122 as if it were an external controller 124.

In one embodiment, the storage device 104 includes an internal CMB 128 storing one or more internal submission queues 130, and one or more internal completion queues 132. The CMB 128 may store other data 134 (e.g. internal data buffers) and internal PRP/SGL entries 136. In one embodiment, the internal controller 126 accesses the internal CMB 128 for fetching and processing internal commands submitted by the device controller 122. The contents of the internal CMB 128, and the processing of the internal command, may be unexposed to (e.g. hidden), and inaccessible by, the host 102.

In one embodiment, the device controller 122 interacts with the external and internal controllers 124, 126 for executing commands requested by the host 102. The device controller 122 may include, without limitation, one or more processors 140 and media interface(s) 142. The one or more processors 140 may be configured to execute computer-readable instructions for processing commands to and from the external and internal controllers 124, 126, and for managing operations of the storage device 104. The computer-readable instructions executed by the one or more processors 140 may be, for example, firmware code.

In one example, the one or more processors 140 may be configured to interact with the external and internal controllers 124, 126 for receiving write or read commands to or from storage media (e.g., NVM media 144). The one or more processors 140 may interact with the NVM media 144 over the media interface 142 for effectuating the write or read actions. The NVM media 144 may include one or more types of non-volatile memory such as, for example, flash memory.

In one embodiment, the storage device 104 further includes an internal memory 138 for short-term storage or temporary memory during operation of the storage device 104. The internal memory 138 may include a DRAM (dynamic random access memory), SRAM (static random access memory), and/or DTCM (Data Tightly Coupled Memory). The internal memory 138 may be used in lieu or in addition to the internal CMB 128, to store some or all of the data stored in the internal CMB 128, such as, for example, the internal submission queues 130, completion queues 132, data 134, PRP/SGL entries 136, and/or the like. Thus, a reference to the internal CMB 128 may be understood to include a reference to the internal memory 138.

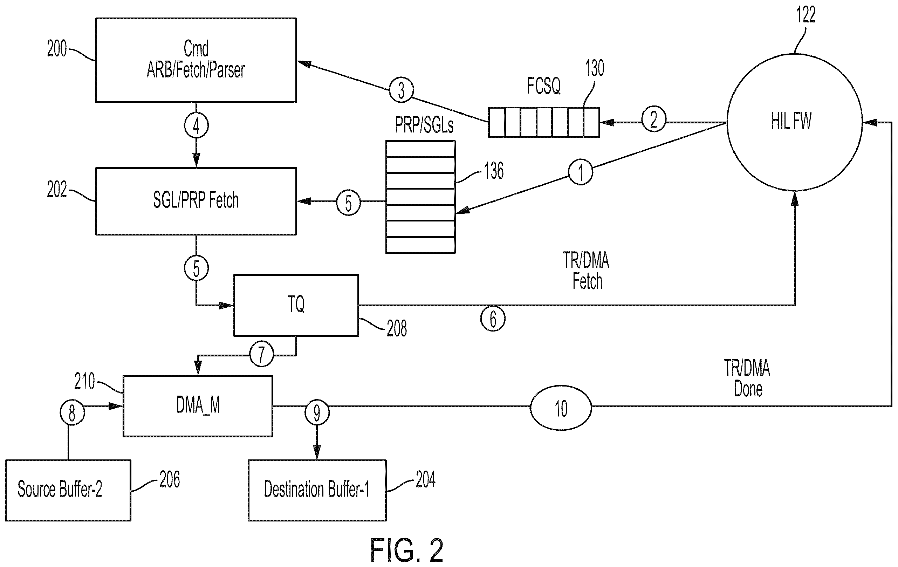

FIG. 2 is a conceptual layout diagram of various modules for submitting and processing commands associated with a storage interface protocol, or vendor defined commands, according to one embodiment. The various modules may be hosted by the external and/or internal controllers 124, 126. Also, although one or more of the modules are assumed to be separate functional units, a person of skill in the art will recognize that the functionality of the modules may be combined or integrated into a single module, or further subdivided into further sub-modules without departing from the scope of the inventive concept.

In one embodiment, instances of a command module 200 and PRP/SGL fetch module 202 are included in both the external and internal controllers 124, 126. The command module 200 may include, for example, a command arbitration submodule, a command fetch submodule, a command parser submodule, and a command dispatcher submodule. The command fetch submodule may be configured to fetch a host command from the external submission queue 112, or an internal command from the internal submission queue 130. The command arbitration submodule may be configured to invoke an arbitration burst policy to arbitrate between various controllers, and between various submission queues of selected controllers, to pick a submission queue from which to fetch a command. The command parser submodule may be configured to parse a command submitted to the external or internal controller 124, 126, for checking and verifying command format, NSID validity, reservation status, whether LBA checking is required or not, protection information validity based on the namespace format, and/or the like. The command parser submodule may also be configured to interface with an LBA overlap checker (not shown) to pass the command if LBA overlap checking is necessary for the command, based on programmed configuration information. The command parser submodule may also determine whether a command should be directly sent to the media interface 142, by-passing the host subsystem, for increasing system performance. The LBA overlap checker may be responsible for checking whether a host or internal command is currently being processed for the same range as with a newly arrived command. If the answer is yes, the LBA overlap checker may hold the newly arrived command until the previously fetched, and currently under-process command, completes. The command dispatcher submodule may be responsible for distributing the commands to various processors based on the type of command (e.g. performance, non-performance, or administrative).

The PRP/SGL fetch module 202 may be configured to fetch PRP or SLG entries 116 from the host memory (in case of the external controller 124), or fetch PRP or SGL entries 136 from the internal CMB 128 (in case of the internal controller 126). In one embodiment, both the command module 200 and the PRP/SGL fetch module 202 adhere to the storage interface protocol in fetching commands and PRP/SGL entries, respectively.

In one embodiment, the host 102 submits a storage interface command to one of the external submission queues 112. The command module 200 (e.g. command fetch submodule) of one of the external controllers 124 fetches/obtains the command from the external submission queue 112, and passes the command to the device controller 122 for further processing. Depending on the type of command submitted by the host, the device controller 122 may access the host memory 110 for reading data 117 needed to process the fetched command, such as, for example, LBA ranges. In one embodiment, if the command submitted by the host 102 is a data transfer command, the PRP/SGL fetch module 202 associated with the external controller 124 may fetch the PRP/SGL entries 116 from the host memory 110 or CMB, for reading or writing the data associated with the data transfer command.

In one embodiment, the device controller 122 is configured to generate one or more internal commands based on the fetched command. The one or more internal commands may include a portion of the fetched command (e.g. an operation code in the fetched command). In one embodiment, the one or more internal commands are different from the fetched command. For example, the internal command may have an operation code different from the operation code in the fetched command.

The device controller 122 may submit the one or more internal commands to the internal submission queue 130, similar to the manner in which the host 102 submits NVMe commands to the external submission queue 112. For example, the device controller 122 may inform the command module 200 of the internal controller 126 that the one or more internal commands have been submitted, by updating a hardware doorbell register. In some cases, the command submitted by the host 102 may be broken into multiple internal commands. In one embodiment, the multiple internal commands are submitted and processed in concurrently with one another (e.g. in parallel) by the one or more internal controllers 126, allowing for increased performance of the storage device 104.

In one embodiment, if the internal command requires a data transfer, the PRP/SGL fetch module 202 of the internal controller 126 may fetch internal PRP/SGL entries 136 from the internal CMB 128, for reading or writing data associated with the internal command. The internal PRP/SGL entries 136 may be generated by the device controller 122. In one embodiment, for a read operation requiring a transfer from the NVM media 144, the internal PRP/SGL entries 136 may be for a destination buffer 204. For a write operation requiring a transfer to the NVM media 144, the internal PRP/SGL entries 136 may be for a source buffer 206.

In one embodiment, a transfer queue module 208 may be configured to process internal requests for transfer data to/from an intermediary buffer (not shown) based on a command type (e.g. read or write). For example, for internal read or write operations, the transfer queue module 208 may obtain information from the device controller 122 on certain data structures for controlling the direct memory access, including a transfer (TR) descriptor and a direct memory access (DMA) descriptor. The TR descriptor may contain a command type (e.g. read or write) for the data transfer. The DMA descriptor may contain information on the intermediary buffer for the command type. For example, if the command type is an internal read command, the intermediary buffer may be an intermediary read buffer used by the media interface 142 to temporarily hold data read from the NVM media 144. If the command type is an internal write command, the intermediary buffer may be an intermediary write buffer used by the media interface 142 to temporarily hold data to be written to the NVM media 144.

In one embodiment, a DMA manager module 210 receives the DMA descriptor as well as the PRP/SGL entries 136, and transfers data from the source buffer 206 to the NVM media 144 (via the intermediary buffer provided in the DMA descriptor) for an internal write operation, or from the NVM media 144 (via the intermediary buffer provided in the DMA descriptor) to the destination buffer 204 for an internal read operation.

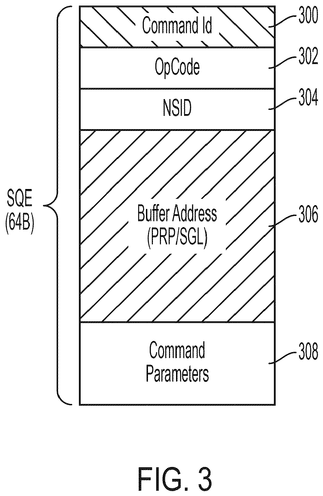

FIG. 3 is a layout block diagram of an internal command stored as a submission queue entry (SQE) in the internal submission queue 130 according to one embodiment. In one embodiment, the internal command is generated according to the storage interface protocol for generating external commands. In this regard, the internal command may be 64 bytes in size, and may include a command identifier (ID) 300, operation code (OpCode) 302, namespace ID (NSID) 304, buffer address 306, and command parameters 308. The command ID 300 may be a command ID within the internal submission queue 130 to which the internal command is submitted.

The OpCode 302 may identify a particular command that is to be executed. In one embodiment, the OpCode 302 is an NVMe OpCode identifying an NVM command (e.g. write, read, administrative, dataset management, or vendor specific command). In some embodiments, the OpCode 302 identifies a new command in an internal command set that is accessible to the internal controller 126 alone.

The namespace ID 304 may identify a namespace on which the command identified by the OPCode 302 operates. The buffer address 306 may include internal PRP/SGL entries 136 (or pointers to the PRP/SGL entries) in the internal CMB 128. Any parameter associated with the command to be executed may be stored as a command parameter 308.

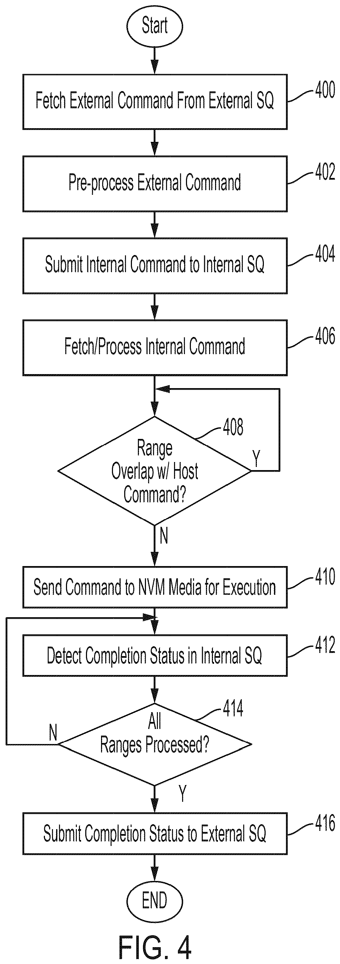

FIG. 4 is a flow diagram for processing a dataset management (DSM) command submitted by the host 102 to the external submission queue 112, for deallocating (unmapping) a given set of LBA ranges from a given namespace according to one embodiment. The process starts, and in block 400, one of the external controllers 124 fetches the command from the external submission queue 112, and passes it to the device controller 122 for pre-processing by the processor 140.

In block 402, the processor 140 takes certain pre-processing actions including, for example, starting a host direct memory access operation over the storage interface bus 106, to transfer the LBA ranges from the host memory 110, to the storage device's internal memory 138. In addition, the processor 140 may parse the LBA ranges for identifying a total number of non-contiguous LBA ranges.

In block 404, the processor 140 generates an internal unmap command for each non-contiguous LBA range identified by the processor. In one embodiment, the unmap command is a command that is not part of the storage interface protocol. The processor 140 may submit the internal unmap command(s) to one or more of the internal submission queues 130.

The unmap command submitted for each LBA range is processed in blocks 406-412. Although the processing is described in relation to one unmap command for a single LBA range, it should be appreciated that other unmap commands submitted for other LBA ranges may be also be processed in parallel according to blocks 406-412.

In block 406, the internal controller 126 fetches and processes the unmap command from the internal submission queue 130. The command module 200 of the internal controller 126 may be invoked for fetching the unmap command from the internal submission queue 130. In one embodiment, given that the processing of the unmap command does not require a data transfer, the PRP/SGL fetch module 202 of the internal controller 126 is not invoked, and no internal PRP/SGL entries 136 are created.

In block 408, the internal controller 126 (e.g. LBA overlap checker) determines whether the LBA range in the internal unmap command overlaps with an LBA of a command that is being processed on behalf of the host 102. For example, the LBA range of the unmap command may overlap with an LBA address that is currently subject of a read operation by the host 102. If an overlap is detected, the internal controller 126 may wait until the host command is finished before proceeding with the unmapping of the LBA range.

If, however, no overlap is detected, the internal controller 126 transmits, in block 410, one or more commands to the media interface 142 via the device controller 122, for executing the actual unmap operation of the LBA range on the NVM media 144. It should be understood that the command parser submodule may also be invoked for performing other checks and verifications of the unmap command prior to delivering the one or more commands to the media interface 142, such as, for example, checking and verifying command format, NSID validity, reservation status, whether LBA checking is required or not, protection information validity based on the namespace format, and/or the like.

Upon determining a completion status of the unmap operation, the internal controller 126 submits, in block 412, an internal completion entry to the internal completion queue 132 associated with the internal submission queue 130 where the internal unmap command was submitted.

In block 414, the processor 140 determines whether all LBA ranges of the submitted DSM deallocate command have been deallocated (e.g. based on status of the internal unmap commands). If the answer is YES, the external controller 124 submits, in block 416, an external completion entry to the external completion queue 114 corresponding to the external submission queue 112 to which the DSM deallocate command was submitted.

It should be appreciated that the processing of the DSM deallocate command according to an embodiment of the present disclosure provides technical improvements to the functioning of the data storage device 104. For example, parallel processing of LBA ranges due to the splitting of the DSM deallocate command into independent unmap commands, each with a separate LBA range, allows for better performance of the storage device. In addition, the checking of each LBA range for overlap (e.g. via hardware) reduces overhead of the processor 140, as manual locking and unlocking of the ranges may be avoided. In addition, in embodiments where the storage device includes two subsystems (e.g. a host subsystem for interacting with the hosts 102, and a flash subsystem for interacting with the NVM media 144), with dedicated processors (e.g. processor 140) executing firmware (e.g. firmware running on the processor 140), the overhead of the host subsystem may be reduced, as the internal commands may be processed without much involvement of the host subsystem.

### Processing Copy Commands

In one embodiment, the command submitted by the host 102 is a copy command (e.g. an NVMe Copy command or Vendor Unique Copy Command) for copying data from one or more source addresses, to one or more destination addresses, of the NVM media 144. The source and destination addresses may be provided as source and destination LBA ranges. In one embodiment, an LBA range includes a starting LBA, and a number of logical blocks in the range.

In one embodiment, the requested copy action may be from a single source LBA range to a single or multiple destination LBA ranges, or from multiple source LBA ranges to a single or multiple destination LBA ranges. The destination LBA range(s) may be in the same or different namespace as the source LBA ranges, and/or have the same or different formatted LBA sizes (e.g. logical block sizes). In some embodiments, the logical blocks may have end-to-end protection information (PI) specified for error detection.

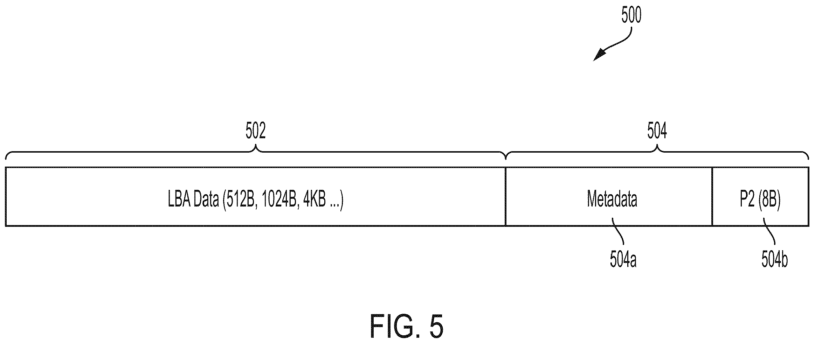

FIG. 5 is a conceptual block diagram of a format of a logical block 500 according to one embodiment within the scope of the appended claims. A logical block may include a data portion 502 and an optional metadata portion 504. The data portion 502 may have one of different sizes, such as, for example, 512B, 1024B, 4096B, or the like. A logical block with different data sizes may be described as having different LBA formats.

The metadata portion 504 may be, for example, 16B, and may be used to convey metadata information 504a, including, for example, end-to-end protection information (PI) 504b. The end-to-end protection information may be used by the controller 124 and/or host 102, to determine the integrity of the logical block. If present, the PI 504b portion may occupy the first eight bytes of the metadata portion 504, or the last eight bytes, depending on the format of the namespace. The remaining portion of the metadata (which may be referred to as user data) may also be eight or more bytes. In some cases, the entire metadata portion 504 just contain PI information 504b or metadata information 504a. In one embodiment, the metadata portion 504 may be referred to as metadata, and the PI 504b may be a component of the metadata.

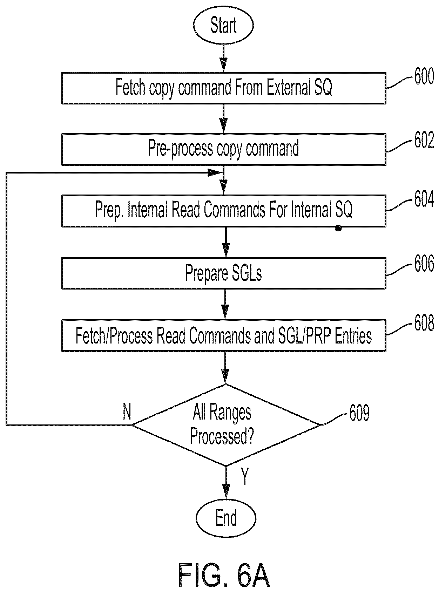

FIGS. 6A-6B are flow diagrams for processing a copy command (e.g. NVMe Copy command or Vendor Unique Copy Command) submitted by the host 102 to the external submission queue 112, according to one embodiment within the scope of the appended claims. Although an NVMe Copy command or Vendor Unique Copy Command is used as an example, it should be understood that the flow diagram may also apply to other copy commands submitted using other protocols similar to the NVMe protocol. It should also be understood that the sequence of steps of the process is not fixed, but can be altered into any desired sequence as recognized by a person of skill in the art. In addition, two or more of the steps of the process may be executed in series or concurrently with each other.

The process starts, and at block 600, one of the external controllers 124 fetches the submitted copy command from the external submission queue 112, and passes it to the device controller 122 for pre-processing by the processor 140.

The pre-processing actions taken by the processor 140, at block 602, may include starting a host direct memory access operation over the storage interface bus 106, to transfer source and destination LBA ranges from the host memory 110, to the storage device's internal memory 138. In addition, the processor 140 may parse the LBA ranges for merging any ranges that are contiguous. The one or more source and destination LBA ranges may be in a different namespace, and/or have different LBA formats. Different NSID for different source and destination namespaces may be passed via the 64B itself, for example, when using an NVMe Vendor Unique Copy command. An NVMe Copy command, however, may not include different namespace information as it may not be supported by the NVMe protocol.

In one embodiment, the processor 140 may generate a read command and a write command from the copy command. For example, the processor 140 decomposes the copy command into independent read and write commands that may be processed by the internal controller 126 without knowledge by the host. In this regard, at block 604, the processor 140 prepares an internal read command for a non-contiguous source LBA range identified by the processor 140, for submitting to one or more of the internal submission queues 130.

At block 606, the processor 140 prepares one or more PRP/SGL entries 136 describing the internal source buffer 206 from where the data is to be read. Assuming that SGL entries are used, a particular SGL entry may include an SGL data block descriptor. The SGL data block descriptor may include an address and a length of a block of data to be read.

At block 608, the internal controller 126 fetches and processes the read command from the internal submission queue 130. The command module 200 of the internal controller 126 may be invoked for fetching and processing the read command. In this regard, the command module 200 may interact with the processor 140 to execute a read transfer from the NVM media 144 to an intermediate read buffer hosted, for example, in the internal memory 138 of the storage device 104. In some embodiments, the internal controller 126 may process the read command based on submitting the command to the internal submission queue 130, without intervention from processor 140, in order to help improve performance of the storage device. In such embodiments, intermediate buffers may be allocated by the device controller 122 without intervention by the processor 140.

In addition to the fetching of the read command, the PRP/SGL fetch module 202 may also be invoked for fetching the PRP/SGL entries 136 generated by the processor 140.

In processing the read command, the transfer queue module 208 may be invoked to obtain information of the intermediary read buffer storing the read data. Based on this information, the DMA manager module 210 transfers the data in the intermediary read buffer, to the internal source buffer 206 described by the SLG/PRP entries 136, and notifies the processor 140 when the transfer is complete.

In one embodiment, the data in the source buffer 206 is processed for copying to a destination LBA range provided by the host in the copy command (e.g. NVMe copy or Vendor Unique Copy command). In this regard, the DMA manager module 210 may transfer the data in the internal source buffer 206, to the internal destination buffer 204, in preparation of an internal write command for performing the copy. In some embodiments, the processor 140 supplies the address of the internal source buffer 206 where the data was copied via the internal read command, for being used as the buffer for processing the internal write command. This may help avoid overhead associated in transferring the data from the internal source buffer 206 to the internal destination buffer 204.

In block 609, a determination is made as to whether all LBA ranges have been processed for generating a read command. If the answer is NO, the processor 140 returns to block 604 to prepare an internal read command for another non-contiguous source LBA range identified by the processor 140. For example, assuming that the processor 140 identifies 100 non-contiguous LBA ranges to be read, the processor 140 may generate 100 separate read commands, with each read command including a different source LBA range as part of the command.

Data that is read via the internal read command may then be written via an internal write command. In this regard, in block 610, the processor 140 prepares the internal write command for submitting to one or more of the internal submission queues 130. In one embodiment, the internal write command includes one of the destination LBA ranges in the copy command (e.g. NVMe copy or Vendor Unique Copy command) submitted by the host.

At block 612, the processor 140 prepares PRP/SGL entries 136 describing the internal destination buffer 204 (or the internal source buffer 206 if supplied by the processor 140) containing the data that is to be written into the NVM media 144. In an embodiment where SGL entries are used, an SGL entry may include an SGL data block descriptor including an address and length of a block of data that is to be read. In some embodiments, the SGL entry may include an SGL bit bucket descriptor including a length of data that is to be skipped when writing to the intermediary write buffer. In one embodiment, the SGL bit bucket descriptor is used to skip writing a PI portion of the data in instances where formatting/type of PI of the source namespace differs from the formatting/type of PI of the destination namespace. Although PI is used as an example of a portion of data that may be skipped, the disclosure is not limited thereto, and other portions of the data may also be skipped for other types of commands.

At block 614, the internal controller 126 fetches and processes the write command from the internal submission queue 130. The command module 200 of the internal controller 126 may be invoked for fetching and processing the write command. In this regard, the command module 200 may interact with the processor 140 to execute a write transfer from the internal destination buffer 204 to an intermediate write buffer hosted, for example, in the internal memory 138 of the storage device 104.

In addition to the fetching of the write command, the PRP/SGL fetch module 202 may also be invoked for fetching the PRP/SGL entries 136 generated by the processor 140.

In processing the write command, the transfer queue module 208 may be invoked for obtain information of the intermediary write buffer to where the data is to be transferred. Based on this information, the DMA manager module 210 transfers the data in the internal destination buffer 204 (or the internal source buffer 206 if supplied by the processor 140) described by the SLG/PRP entries 136, to the intermediary write buffer, and notifies the processor 140 when the transfer is complete.

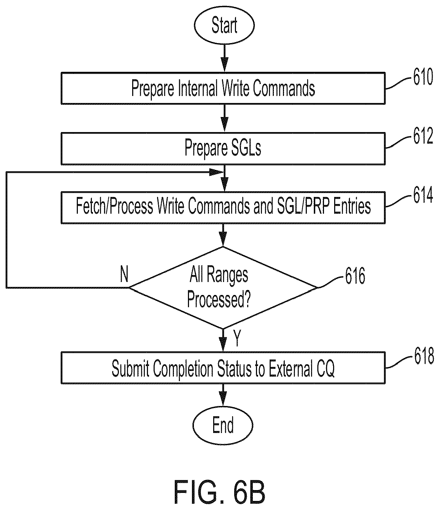

In one embodiment, the separate read and/or write commands are submitted to the one or more internal submission queues 130 for being processed concurrently. For example, a first write command for an LBA range may be processed via the steps of FIG. 6B after a first read command for the LBA range has been executed via the steps of FIG. 6A, without waiting for the read commands for all LBA ranges to be completed. Similarly, a second read command for a second LBA range may be processed concurrently with the processing of the first write command. The submitting of the internal read commands to the internal submission queues 130 may be undetected by the host 102.

At block 616, a determination is made as to whether all the LBA ranges have been copied. If the answer is YES, the external controller 124 submits, in block 618, an external completion entry to the external completion queue 114 corresponding to the external submission queue 112 to which the copy command was submitted.

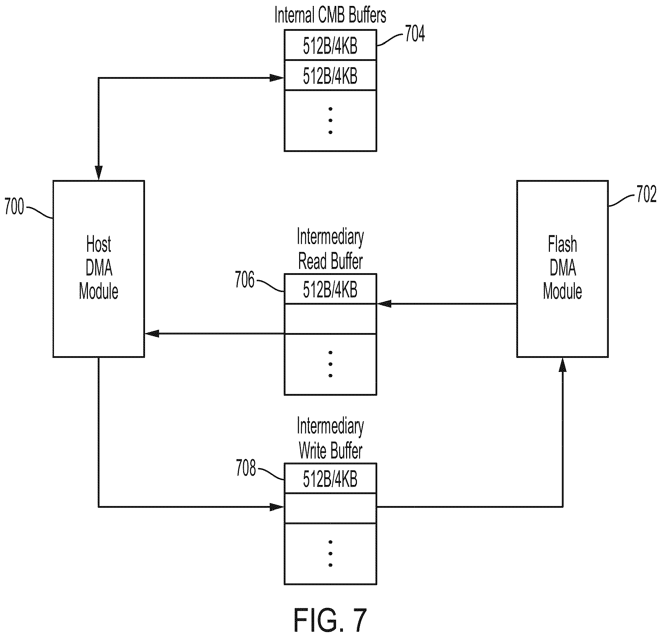

FIG. 7 is a more detailed block diagram of components of the storage device 104 for processing internal read and write commands associated with a copy command, according to one embodiment. The components may include a host DMA module 700, flash DMA module 702, internal CMB buffers 704, intermediary read buffer 706, and intermediary write buffer 708.

In executing an internal read command, the processor 140 submits a read request to the flash DMA module 702 for reading a logical block of data from the NVM media 144 corresponding to a source LBA address of the copy command. In one example, the flash DMA module 702 may be part of the media interface 142. The size of the data that is accessed by the flash DMA module 702 may depend on the LBA format used by the namespace from where data is read, and may also depend on available intermediate data buffer size. A request to the flash DMA module 702 may be in terms of intermediate buffer granularity, which may be 512B, 4KB, 8KB or 16KB. For example, depending on the LBA format and required copy data length, 512B, 4KB, 8KB or 16KB of data may be accessed at a time.

In one embodiment, the block of data retrieved from the NVM media 144 is placed in the intermediary read buffer 706. The intermediary read buffer 706 may be located, for example, in the internal memory 138 of the storage device 104. In one embodiment, the data in the intermediary read buffer 706 is accessed by the host DMA module 700, and placed in one of the internal CMB buffers 704. In this regard, the host DMA module 700 may be similar to the DMA manager module 210, and the one of the internal CMB buffers 704 where the data is placed, may be similar to the internal source buffer 206.

In executing the internal write command, the host DMA module 700 places the data in one of the internal CMB buffers 704 (e.g. the internal destination buffer 204) into the intermediary write buffer 708. The intermediary write buffer 706 may be located, for example, in the internal memory 138 of the storage device 104. In one embodiment, data is written to the intermediary write buffer 708 according to the LBA format of the namespace associated with the destination LBA. The flash DMA module 702 may access the data in the intermediary write buffer 708, and write the data to a location of the NVM media 144 corresponding to the destination LBA.

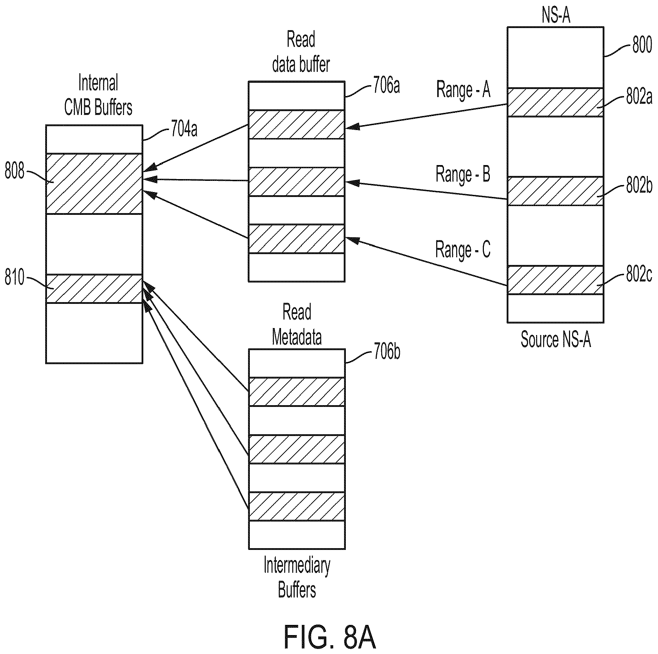

FIGS. 8A-8C are conceptual layout diagrams of various buffers invoked for copying data from a source namespace to a destination namespace according to one embodiment. The data in the source namespace 800 may be stored in multiple LBA ranges 802a-802c (collectively referenced as 802). In processing an internal read command to execute a read portion of the copy command, the flash DMA module 702 (FIG. 7) may execute a read transfer from the source LBA ranges 802, into intermediate read buffers (e.g. read data buffer 706a and read metadata buffer 706b). In this regard, as discussed with reference to FIG. 5, a logical block of data may have a data portion 502 and a metadata portion 504. In one embodiment, the flash DMA module 702 reads the data portion in the various source LBA ranges 802, and stores the data portion into the read data buffer 706a. The flash DMA module 702 may also read the metadata portions of the data, and store the metadata portions into the read metadata buffer 706b.

In completing the internal read command, the host DMA module 700 may transfer the data in the read data buffer 706a, and the metadata in the read metadata buffer 706b, into the internal CMB buffer 704a. The transferred data may be stored in a data section 808 of the internal CMB buffer 704a, and the transferred metadata may be stored in a metadata section 810 of the internal CMB buffer 704a, but the embodiments are not limited thereto.

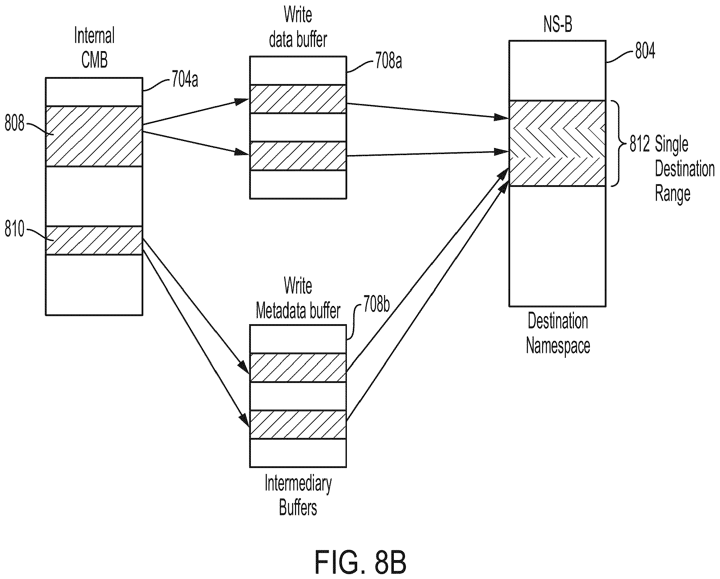

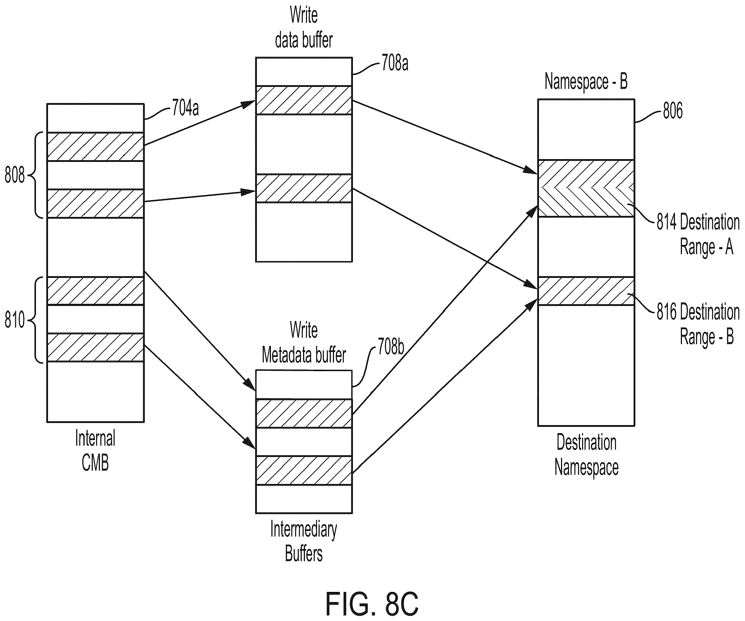

The read data may then be processed for writing into the destination LBA range(s). In the example of FIG. 8B, data is written to a single destination LBA range 812 in the destination namespace 804. In the example of FIG. 8C, data is written to multiple destination LBA ranges 814, 816. For both scenarios, the host DMA module 700 may transfer the data in the internal CMB buffer 704a, to the intermediate write buffers (e.g. write data buffer 708a and write metadata buffer 708b). For example, the host DMA module 700 may transfer the data section 808 to the write data buffer 708a, and the metadata section 810 to the write metadata buffer 708b. In the example of FIG. 8B, the flash DMA module 702 may then transfer the data along with the corresponding metadata in the write buffers 708a, 708b, to the single destination LBA range 812 in the destination namespace 804. In the example of FIG. 8C, the flash DMA module 702 may transfer the data along with the corresponding metadata in the write buffers 708a, 708b, to the multiple destination LBA ranges 814, 816. For example, the data in the write data buffer 708a may be transmitted to the target LBA ranges 814 and 816, and the metadata of the write metadata buffer 708b may be transmitted to the target LBA ranges 814 and 816.

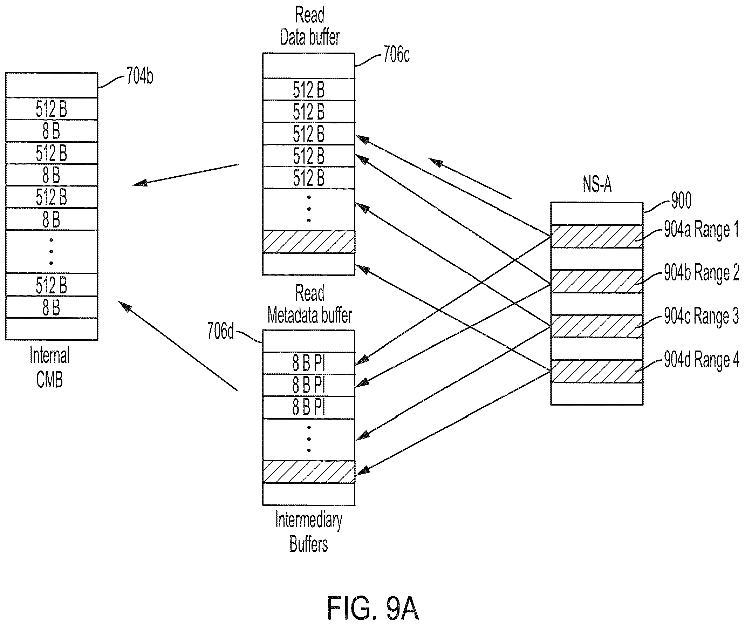

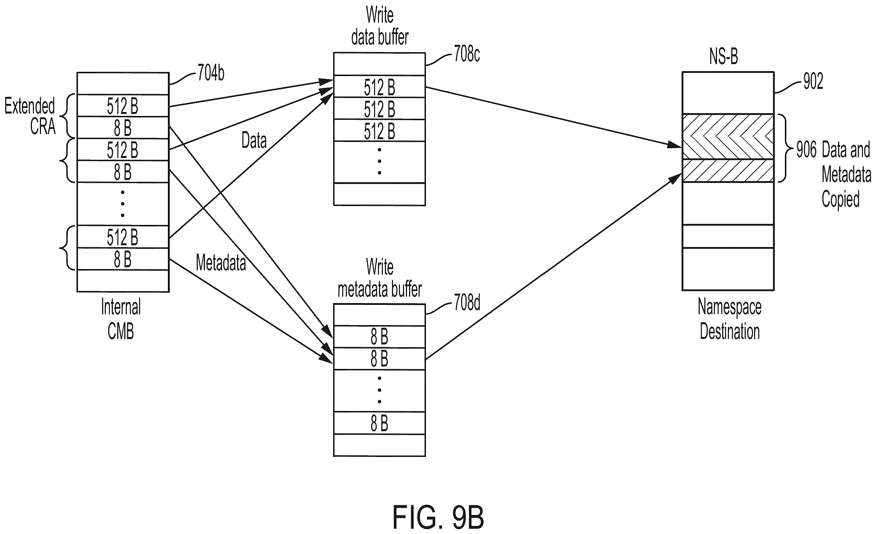

FIGS. 9A-9B are conceptual layout diagrams of various buffers invoked for copying data from multiple LBA ranges of a source namespace 900, to a single LBA range of a destination namespace 902, where both the source and destination namespaces have the same LBA format. For example, the logical block data size in the source and destination namespaces may be 512B, with each logical block having metadata that includes 8B of PI. FIGS. 9A-9B may also describe buffers that may be used to copy data from multiple LBA ranges of the source namespace 900, to multiple destination LBA ranges, where both the source and destination namespaces 900 and 902 are formatted with the same LBA size.

In the example of FIGS. 9A-9B, four source LBA ranges 904a-904d (e.g. LBA 0-7, LBA 10-13, LBA 20-23, and LBA 28-43) are copied to a single destination LBA range 906 (e.g. LBA 0-31). In this regard, the data in the four source LBA ranges 904a-904d may be read and stored (e.g. 512B, 4KB, 8KB, 16KB at a time) into an intermediate read data buffer 706c, and transferred to the internal CMB buffer 704b. The PI data corresponding to each logical block of data that is read may also be read and stored (e.g. 8B at a time) into an intermediate read metadata buffer 706d, and transferred to the internal CMB buffer 704b.

In performing the write operation, the data in the internal CMB buffer 704b may be transferred to an intermediate write data buffer 708c. The metadata stored in the internal CMB buffer 704b may also be copied to the intermediate write metadata buffer 708d. In one embodiment, because the source and destination LBA formats in the example of FIGS. 9A-9B are the same, the PI portion of the metadata is not copied into the intermediate write metadata buffer 708d. The data and metadata in the write data buffers 708c, 708d may be transferred to the destination LBA range 906 for completing the copy operation. In one embodiment, the PI portion of the metadata, that was not copied, may be regenerated (e.g. by the host DMA module 700), and stored in the destination LBA range 906.

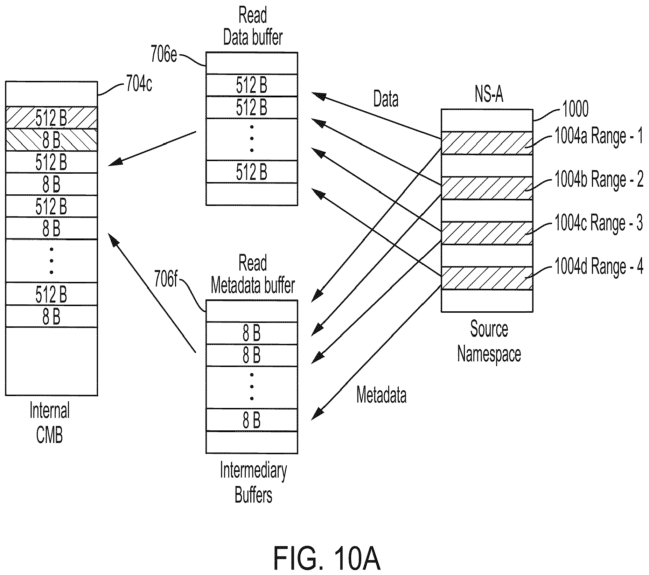

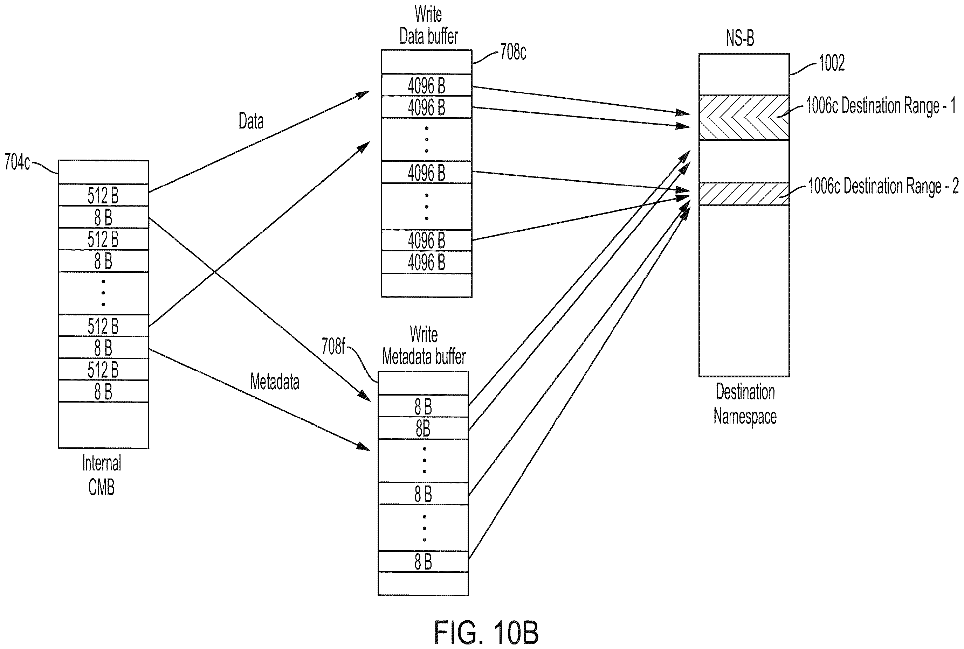

FIGS. 10A-10B are conceptual layout diagrams of various buffers invoked for copying data from multiple LBA ranges of a source namespace 1000, to a plurality of LBA ranges of a destination namespace 1002, where the source and destination namespaces have different LBA formats. For example, the logical block data size of the source namespace 1000 may be 512B, while the logical block data size of the destination namespace 1002 may be 4096B. In the example of FIGS. 10A-10B, four source LBA ranges 1004a-1004d (e.g. LBA 0-7, LBA 10-13, LBA 20-23, and LBA 28-43) are copied to two destination LBA ranges 1006a, 1006b (e.g. LBA 0-1 and LBA 4-5). FIGS. 10A-10B may also describe buffers that may be used to copy data from multiple LBA ranges of a source namespace 1000, to a single LBA range of a destination namespace 1002, where the source and destination namespaces 1000 and 1002 are formatted with different LBA sizes.

In performing a read operation, the data in the various LBA ranges 1004a-1004d of the source namespace 1000 may be copied into the intermediary read data buffer 706e, and the corresponding metadata may be copied into the intermediary read metadata buffer 706f. The contents of the intermediary read data buffer 706e and the intermediary read metadata buffer 706f may then be transferred to the internal CMB buffer 704c.

In performing the write operation, the data in the internal CMB buffer 704c may be transferred to the intermediary write data buffer 708e, according to the LBA format of the destination namespace 1002. For example, 4096B of data from the internal CMB buffer 704c may be stored at a time in the intermediary write data buffer 708e. The metadata in the internal CMB buffer 704c may also be copied to the intermediate write metadata buffer 708f. The data and metadata in the write data buffers 708e, 708f may then transferred to the destination LBA ranges 1006a, 1006b. In one embodiment, because the source and destination namespaces in the example of FIGS. 10A-10B have different LBA formats, any PI portion of the metadata may be regenerated by the host DMA module 700, according to the PI formatting used by the destination namespace.

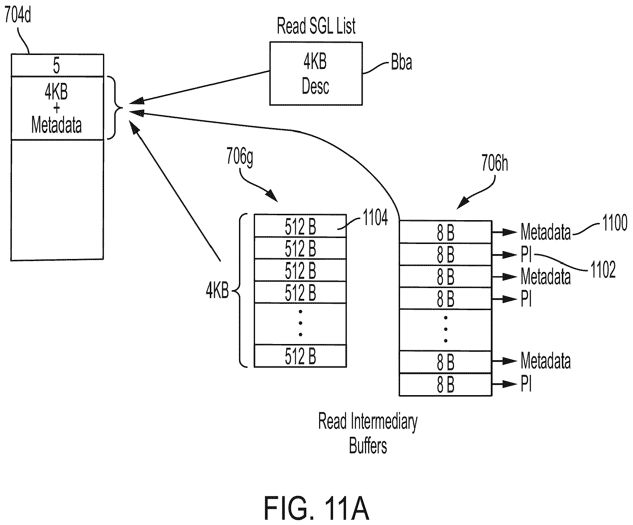

FIGS. 11A-11B are conceptual layout diagrams of buffers and SGL tables used for copying data in one source LBA range of one namespace, to a destination LBA range of another namespace, wherein the source and destination LBA ranges are the source and destination LBA ranges in FIGS. 10A-10B. It should be appreciated that similar SGL tables may be used for the buffers in the embodiment of FIGS. 9A-9B, where the LBA formats for the source and destination namespaces are the same.

In the examples of FIGS. 11A-11B, SGL bit bucket descriptors 1110 are used as described below, to skip the PI information of the read data, to allow the assembling of the read data and the associated metadata (including appropriate PI information) in a different LBA format in the destination namespace. The skipping of the PI information may be done while writing to the internal CMB buffer as part of a read operation, or it may be done while reading from the internal CMB buffer as part of a write operation. The regeneration of the PI may then be done by the host DMA module as per the destination LBA format.

In the example of FIGS. 11A-11B, eight logical blocks of data (each 512B) in the source namespace form a single destination logical block having a size of 4096B. The PI information (e.g. 8B PI information) that is associated with each 512B block of data is skipped using the bit bucket descriptor during the write portion of the process, and a single block of data having a size of 4096B may be formed in the destination namespace, with regenerated PI information (e.g. regenerated 8B of PI information).

More specifically, in executing an internal read operation, data (e.g. 4KB of data) that is retrieved from the NVM media 144 and stored in an intermediary read data buffer 706g (similar to the process in FIGS. 10A-10B), may be transferred into an internal CMB buffer 704d. Metadata stored in an intermediary read metadata buffer 706h may also be transferred into the internal CMB buffer 704d. The internal CMB buffer 704d where the data and metadata are transferred may be described by one or more PRP/SGL entries 136a. In one embodiment, the PRP/SGL entries 136a are generated by the processor 140 based on the fetching and processing an internal read command. It should be appreciated that although the examples of FIGS. 8-10 do not expressly depict PRP/SGL entries, PRP/SGL entries may also be used in those examples to describe the internal CMB buffers 704a-704c.

In the example of FIGS. 11A-11B, the metadata in the intermediary read metadata buffer 706h may include a metadata portion 1100 and a PI portion 1102 for each logical block of data 1104 (e.g. 512B of data) in the intermediary read metadata buffer 706g. In executing the write portion of the copy command, the logical blocks of data 1104 and corresponding metadata portions 1100 that are transferred into the internal CMB buffer 704d, may be written from the internal CMB buffer 704d into respectively the intermediary write data buffer 708g and intermediary write metadata buffer 708h. In one embodiment, the data written into the intermediary write data buffer 708g follows the LBA format of the destination namespace. For example, each logical block of data in the intermediary write data buffer 708g may be 4096B in size.

The LBA formats of the source and destination namespaces in the example of FIGS. 11A-11B, are different. Accordingly, according to one embodiment, the PI portions 1102 of the read metadata are skipped, and not copied from the internal CMB 704d into the write metadata buffer 708h. In one embodiment, the skipped PI portion of the metadata is generated as PI 1106, by the host DMA module 700. The generated PI 1106 may be based on the PI formatting used by the destination namespace.

In one embodiment, information provided by the PRP/SGL entries 136b that are used for writing data to the intermediate write buffers 708g, 708h, allow the skipping of the PI portions 1102 of the read metadata in the internal CMB 704d. In one embodiment, the PRP/SGL entries 136b are generated by the processor 140 based on the fetching and processing an internal write command. In one embodiment, the processor 140 may determine that PI portions of the metadata to be written are to be skipped. Such determination may be based on determining that metadata read from the source namespace has the PI portion enabled, and further based on determining that the LBA format of the destination namespace differs from the LBA format of the source namespace.

In one embodiment, the SGL entries may include an SGL data descriptor 1108 for the data to be copied, including a descriptor for the block of data to be copied (e.g. 512B) and associated metadata (e.g. 8B of user data that excludes the PI portion). In one embodiment, an SGL bit bucket descriptor 1110 that follows the SGL data descriptor 1108 may be used for refraining from copying the PI portions of the metadata in the internal CMB 704d. For example, the SGL bit bucket descriptor 1110 may identify 8B of PI data that is to be skipped.

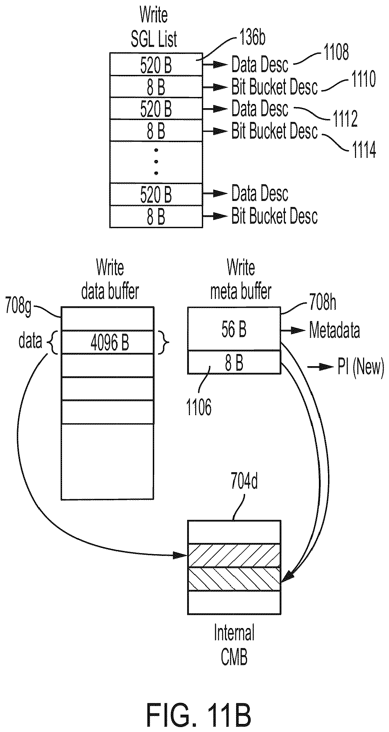

In one embodiment, the host DMA module 700 utilizes the PRP/SGL entries 136b for transferring data from the internal CMB buffer 704d, into the write data and metadata buffers 708g, 708h. In this regard, the host DMA module 700 may transfer the data in the CMB buffer described in the SGL data descriptor 1108 into the write data and metadata buffers 708g, 708h, and skip a portion of the data described in the SGL bit bucket descriptor 1110. The host DMA module 700 may continue in a similar manner, transferring data described in the remaining SGL data descriptors 1112, and skipping the data described in the remaining SGL bit bucket descriptors 1114. The PI portion of the metadata that is skipped may then be regenerated by the host DMA module 700 and stored in the metadata buffer 708h as per the destination namespace LBA format. In one embodiment, the regenerated PI is 8B in size, and is associated with 4096B of data in the destination namespace. In one embodiment, the 8B PI information 1106 may form the last 8B of the user data which, in the example of FIG. 11B, is 56B in size, and is copied from the source namespace.

In some embodiments, instead of including the SGL bit bucket descriptor in the PRP/SGL entries 136b for transferring data from the internal CMB buffer 704d, into the write data and metadata buffers 708g, 708h during the write process, the SGL bit bucket descriptor may be included in the PRP/SGL entries 136a used for the read process. According to this embodiment, a portion of the data described in the SGL bit bucket descriptor in the PRP/SGL entries are skipped, and not transferred from the intermediary read metadata buffer 706h into the internal CMB buffer 704d.

It should be appreciated that embodiments of the present disclosure allow processing of a copy command across different namespaces, even when the LBA formats between the namespaces differ, and/or even when different end-to-end protection information is used by the different namespaces. The use of SGL bit bucket descriptors to skip end-to-end protection information of the read data allows the assembling of the data and associated metadata (including protection information) in a different LBA format in the destination namespace. The regeneration of the PI may then be done by the host DMA module as per the destination LBA format.

It should be appreciated that the one or more processors discussed above may be include, for example, application specific integrated circuits (ASICs), general purpose or special purpose central processing units (CPUs), digital signal processors (DSPs), graphics processing units (GPUs), and/or programmable logic devices such as field programmable gate arrays (FPGAs). In a processor, as used herein, each function may be performed by hardware, firmware, and/or software. A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept which is defined by the appended claims.

The terminology used herein is for the purpose of describing particular embodiments only and is not intended to be limiting of the inventive concept which is defined by the appended claims. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Although exemplary embodiments of a system and method for processing copy commands have been specifically described and illustrated herein, many modifications and variations will be apparent to those skilled in the art. Accordingly, it is to be understood that a system and method for processing copy commands constructed according to principles of this disclosure may be embodied other than as specifically described herein. The scope of protection is defined by the appended claims.

## Claims

1. A method for processing a copy command from a host (102) to a storage device (104), the method comprising:
receiving, by a first controller (124) of the storage device (104), the copy command from the host (102) via a first queue (112), wherein the copy command includes a first source address and a first destination address, wherein the first source address is associated with a first logical space configured to store a logical block of data of a first size, and the first destination address is associated with a second logical space configured to store a logical block of data of a second size different from the first size;
generating, by one or more processors (140) of the storage device (104), based on the copy command, a first read command and a first write command;
submitting, by the one or more processors (140) of the storage device (104), the first read command and the first write command to a second controller of the storage device (104) via a second queue (130);
retrieving and processing, by the second controller, the first read command and the first write command from the second queue (130);
reading, by the second controller, based on the processing of the first read command, data stored in a first location of a storage media of the storage device (104) associated with the first source address;
writing, by the second controller, based on the processing of the first write command, the data to a second location of the storage media associated with the first destination address; and
transmitting, by the first controller (124), a signal to the host (102) for indicating completion of the copy command,
wherein the data stored in the first location of the storage media includes metadata (504) having a first portion (504a) and a second portion (504b), wherein the second portion (504b) of the metadata (504) includes data protection information, and wherein the writing of the data includes:
writing the first portion (504a) of the metadata (504) to a third location of the storage media associated with the first destination address;
generating, by the storage device (104), a third portion of the metadata (504) based on the size of the logical block data of the first destination address; and
writing, by the storage device (104), the third portion of the metadata (504) in the storage media instead of the second portion (504b) of the metadata (504).

2. The method of claim 1, wherein the first source address is associated with the first logical space of the storage device (104) identified by a first identifier, and the first destination address is associated with the second logical space of the storage device (104) identified by a second identifier.

3. The method of claim 1 or 2, wherein the copy command includes a second destination address, wherein the writing the data includes writing a first portion of the data to the second location of the storage media associated with the first destination address, and writing a second portion of the data to a third location of the storage media associated with the second destination address.

4. The method of any one of claims 1 to 3, further comprising:
skipping reading of the second portion (504b) of the metadata (504) based on the processing of the first read command.

5. The method of any one of claims 1 to 4, further comprising:
skipping writing of the second portion (504b) of the metadata (504) based on the processing of the first write command.

6. The method of any one of claims 1 to 5, wherein the copy command is associated with a second source address, the method further comprising:
generating, by the storage device (104), based on the copy command, a second read command;
submitting, by the storage device (104), the second read command to the second controller of the storage device (104) via the second queue (130);
retrieving and processing, by the second controller, the second read command from the second queue (130); and
reading, by the storage device (104), based on the processing of the second read command, data stored in a third location of the storage device (104) associated with the second source address,
wherein the processing of the second read command by the second controller is concurrent with the processing of the first write command.

7. The method of any one of claims 1 to 6, wherein the storage device (104) is a non-volatile storage device (104), and the first controller (124) and the second controller adhere to a non-volatile memory express, NVMe, protocol.

8. The method of any one of claims 1 to 7 further comprising:
submitting, by the second controller, a first completion status to a first completion queue (132).

9. The method of claim 8, wherein the transmitting of the signal includes submitting a second completion status to a second completion queue (114) based on the submitting of the first completion status to the first completion queue (132).

10. A storage device (104) comprising:
a storage media;
one or more processors coupled to the storage media, the one or more processors being configured to respectively:
receive, via a first controller (124) and a first queue (112), a copy command from a host (102), wherein the copy command includes a first source address and a first destination address, wherein the first source address is associated with a first logical space configured to store a logical block of data of a first size, and the first destination address is associated with a second logical space configured to store a logical block of data of a second size different from the first size;
generate, based on the copy command, a first read command and a first write command;
submit the first read command and the first write command to a second controller via a second queue (130);
retrieve and process, via the second controller, the first read command and the first write command from the second queue (130);
read, via the second controller, based on the processing of the first read command, data stored in a first location of the storage media associated with the first source address;
write, via the second controller, based on the processing of the first write command, the data to a second location of the storage media associated with the first destination address; and
transmit, via the first controller (124), a signal to the host (102) for indicating completion of the copy command,
wherein the data stored in the first location of the storage media includes metadata (504) having a first portion (504a) and a second portion (504b), wherein the second portion (504b) of the metadata (504) includes data protection information, and wherein in writing the data, the one or more processors are further configured to:
write the first portion (504a) of the metadata (504) to a third location of the storage media associated with the first destination address;
generate a third portion of the metadata (504) based on the size of the logical block data of the first destination address; and
write the third portion of the metadata (504) in the storage media instead of the second portion (504b) of the metadata (504).

11. The storage device (104) of claim 10, wherein the first source address is associated with the first logical space of the storage device (104) identified by a first identifier, and the first destination address is associated with the second logical space of the storage device (104) identified by a second identifier.

12. The storage device (104) of claim 10 or 11, wherein the copy command includes a second destination address, wherein in writing the data, the one or more processors are configured to write a first portion of the data to the second location of the storage media associated with the first destination address, and write a second portion of the data to a third location of the storage media associated with the second destination address.

13. The storage device (104) of any one of claims 10 to 12, wherein the one or more processors are further configured to:
skip reading of the second portion (504b) of the metadata (504) based on the processing of the first read command.

14. The storage device (104) of any one of claims 10 to 13, wherein the one or more processors are further configured to:
skip writing of the second portion (504b) of the metadata (504) based on the processing of the first write command.

## Patentansprüche

1. Verfahren zum Verarbeiten eines Kopierbefehls von einem Host (102) zu einer Speichervorrichtung (104), wobei das Verfahren aufweist:
Empfangen des Kopierbefehls von dem Host (102) durch eine erste Steuerung (124) der Speichervorrichtung (104) über eine erste Warteschlange (112), wobei der Kopierbefehl eine erste Quelladresse und eine erste Zieladresse enthält, wobei die erste Quelladresse mit einem ersten logischen Raum verknüpft ist, der so konfiguriert ist, dass er einen logischen Datenblock mit einer ersten Größe speichert, und die erste Zieladresse mit einem zweiten logischen Raum verknüpft ist, der so konfiguriert ist, dass er einen logischen Datenblock mit einer zweiten Größe speichert, die sich von der ersten Größe unterscheidet;
Erzeugen, durch einen oder mehrere Prozessoren (140) der Speichervorrichtung (104), basierend auf dem Kopierbefehl, eines ersten Lesebefehls und eines ersten Schreibbefehls;
Übermitteln des ersten Lesebefehls und des ersten Schreibbefehls durch den einen oder die mehreren Prozessoren (140) der Speichervorrichtung (104) an eine zweite Steuerung der Speichervorrichtung (104) über eine zweite Warteschlange (130);
Abrufen und Verarbeiten, durch die zweite Steuerung, des ersten Lesebefehls und des ersten Schreibbefehls von der zweiten Warteschlange (130);
Lesen, durch die zweite Steuerung, basierend auf dem Verarbeiten des ersten Lesebefehls, von Daten, die an einem ersten Ort eines Speichermediums der Speichervorrichtung (104) gespeichert sind, der mit der ersten Quelladresse verknüpft ist;
Schreiben, durch die zweite Steuerung, basierend auf dem Verarbeiten des ersten Schreibbefehls, der Daten an einen zweiten Ort des Speichermediums, der mit der ersten Zieladresse verknüpft ist; und
Senden eines Signals an den Host (102) durch die erste Steuerung (124), um den Abschluss des Kopierbefehls anzuzeigen,
wobei die an dem ersten Ort des Speichermediums gespeicherten Daten Metadaten (504) mit einem ersten Teil (504a) und einem zweiten Teil (504b) enthalten, wobei der zweite Teil (504b) der Metadaten (504) Datenschutzinformation enthält, und wobei das Schreiben der Daten enthält:
Schreiben des ersten Teils (504a) der Metadaten (504) an einen dritten Ort des Speichers, der mit der ersten Zieladresse verknüpft ist;
Erzeugen, durch die Speichervorrichtung (104), eines dritten Teils der Metadaten (504) basierend auf der Größe der logischen Blockdaten der ersten Zieladresse; und
Schreiben, durch die Speichervorrichtung (104), des dritten Teils der Metadaten (504) in den Speicher anstelle des zweiten Teils (504b) der Metadaten (504).

2. Verfahren nach Anspruch 1, wobei die erste Quelladresse mit dem ersten logischen Raum der Speichervorrichtung (104) verknüpft ist, der durch einen ersten Identifizierer identifiziert wird, und die erste Zieladresse mit dem zweiten logischen Raum der Speichervorrichtung (104) verknüpft ist, der durch einen zweiten Identifizierer identifiziert wird.

3. Verfahren nach Anspruch 1 oder 2, wobei der Kopierbefehl eine zweite Zieladresse enthält, wobei das Schreiben der Daten Schreiben eines ersten Teils der Daten an den zweiten Ort des Speichers, der mit der ersten Zieladresse verknüpft ist, und Schreiben eines zweiten Teils der Daten an einen dritten Ort des Speichers, der mit der zweiten Zieladresse verknüpft ist, beinhaltet.

4. Verfahren nach einem der Ansprüche 1 bis 3, ferner aufweisend:
Überspringen des Lesens des zweiten Teils (504b) der Metadaten (504) basierend auf dem Verarbeiten des ersten Lesebefehls.

5. Verfahren nach einem der Ansprüche 1 bis 4, ferner aufweisend:
Überspringen des Schreibens des zweiten Teils (504b) der Metadaten (504) basierend auf dem Verarbeiten des ersten Schreibbefehls.

6. Verfahren nach einem der Ansprüche 1 bis 5, wobei der Kopierbefehl mit einer zweiten Quelladresse verknüpft ist, wobei das Verfahren ferner aufweist:
Erzeugen, durch die Speichervorrichtung (104), basierend auf dem Kopierbefehl, eines zweiten Lesebefehls;
Übermitteln des zweiten Lesebefehls durch die Speichervorrichtung (104) an die zweite Steuerung der Speichervorrichtung (104) über die zweite Warteschlange (130);
Abrufen und Verarbeiten des zweiten Lesebefehls durch die zweite Steuerung von der zweiten Warteschlange (130); und
Lesen von Daten, die an einem dritten Ort der Speichervorrichtung (104) gespeichert sind, der mit der zweiten Quelladresse verknüpft ist, durch die Speichervorrichtung (104), basierend auf dem Verarbeiten des zweiten Lesebefehls,
wobei das Verarbeiten des zweiten Lesebefehls durch die zweite Steuerung gleichzeitig mit dem Verarbeiten des ersten Schreibbefehls erfolgt.

7. Verfahren nach einem der Ansprüche 1 bis 6, wobei es sich bei der Speichervorrichtung (104) um eine nichtflüchtige Speichervorrichtung (104) handelt und sich die erste Steuerung (124) und die zweite Steuerung an ein Non-Volatile Memory Express, NVMe, -Protokoll halten.

8. Verfahren nach einem der Ansprüche 1 bis 7 weist ferner auf:
Übermitteln eines ersten Erledigungsstatus durch die zweite Steuerung an eine erste Erledigungswarteschlange (132).

9. Verfahren nach Anspruch 8, wobei Senden des Signals das Übermitteln eines zweiten Erledigungsstatus an eine zweite Erledigungswarteschlange (114) enthält, basierend auf dem Übermitteln des ersten Erledigungsstatus an die erste Erledigungswarteschlange (132).

10. Speichervorrichtung (104) aufweisend:
ein Speichermedium;
einen oder mehrere Prozessoren, die mit dem Speichermedium gekoppelt sind, wobei der eine oder die mehreren Prozessoren jeweils konfiguriert sind zum:
Empfangen, über eine erste Steuerung (124) und eine erste Warteschlange (112), eines Kopierbefehls von einem Host (102), wobei der Kopierbefehl eine erste Quelladresse und eine erste Zieladresse enthält, wobei die erste Quelladresse mit einem ersten logischen Raum verknüpft ist, der so konfiguriert ist, dass er einen logischen Datenblock mit einer ersten Größe speichert, und die erste Zieladresse mit einem zweiten logischen Raum verknüpft ist, der so konfiguriert ist, dass er einen logischen Datenblock mit einer zweiten Größe speichert, die sich von der ersten Größe unterscheidet;
Erzeugen, basierend auf dem Kopierbefehl, eines ersten Lesebefehls und einen ersten Schreibbefehl zu erzeugen;
Übermitteln des ersten Lesebefehls und des ersten Schreibbefehls an eine zweite Steuerung über eine zweite Warteschlange (130);
Abrufen und Verarbeiten des ersten Lesebefehls und des ersten Schreibbefehls von der zweiten Warteschlange (130) über die zweite Steuerung;
Lesen, über die zweite Steuerung, basierend auf dem Verarbeiten des ersten Lesebefehls, von Daten, die an einem ersten Ort des Speichermediums gespeichert sind, der mit der ersten Quelladresse verknüpft ist;
Schreiben der Daten über die zweite Steuerung, basierend auf dem Verarbeiten des ersten Schreibbefehls, an einen zweiten Ort des Speichermediums, der mit der ersten Zieladresse verknüpft ist; und
Senden, über die erste Steuerung (124) eines Signals an den Host (102), um den Abschluss des Kopierbefehls anzuzeigen,
wobei die an dem ersten Ort des Speichermediums gespeicherten Daten Metadaten (504) mit einem ersten Teil (504a) und einem zweiten Teil (504b) enthalten, wobei der zweite Teil (504b) der Metadaten (504) Datenschutzinformation enthält, und wobei beim Schreiben der Daten der eine oder die mehreren Prozessoren ferner konfiguriert sind zum
Schreiben des ersten Teils (504a) der Metadaten (504) an einen dritten Ort des Speichers, der mit der ersten Zieladresse verknüpft ist;
Erzeugen eines dritten Teils der Metadaten (504) basierend auf der Größe der logischen Blockdaten der ersten Zieladresse; und
Schreiben des dritten Teils der Metadaten (504) in die Speichermedien anstelle des zweiten Teils (504b) der Metadaten (504).

11. Speichervorrichtung (104) nach Anspruch 10, wobei die erste Quelladresse mit dem ersten logischen Raum der Speichervorrichtung (104) verknüpft ist, der durch einen ersten Identifizierer identifiziert ist, und die erste Zieladresse mit dem zweiten logischen Raum der Speichervorrichtung (104) verknüpft ist, der durch einen zweiten Identifizierer identifiziert ist.

12. Speichervorrichtung (104) nach Anspruch 10 oder 11, wobei der Kopierbefehl eine zweite Zieladresse enthält, wobei beim Schreiben der Daten der eine oder die mehreren Prozessoren so konfiguriert sind, dass sie einen ersten Teil der Daten an den zweiten Ort des Speichermediums schreiben, der mit der ersten Zieladresse verknüpft ist, und einen zweiten Teil der Daten an einen dritten Ort des Speichermediums schreiben, der mit der zweiten Zieladresse verknüpft ist.

13. Speichervorrichtung (104) nach einem der Ansprüche 10 bis 12, wobei der eine oder die mehreren Prozessoren ferner konfiguriert sind zum:
Lesen des zweiten Teils (504b) der Metadaten (504) basierend auf dem Verarbeiten des ersten Lesebefehls zu überspringen.

14. Speichervorrichtung (104) nach einem der Ansprüche 10 bis 13, wobei der eine oder die mehreren Prozessoren ferner konfiguriert sind zum:
Schreiben des zweiten Teils (504b) der Metadaten (504) basierend auf dem Verarbeiten des ersten Schreibbefehls zu überspringen.

## Revendications

1. Procédé pour traiter une commande de copie d'un hôte (102) vers un dispositif de stockage (104), le procédé comprenant:
la réception, par un premier contrôleur (124) du dispositif de stockage (104), de la commande de copie de l'hôte (102) via une première file (112), la commande de copie comprenant une première adresse de source et une première adresse de destination, la première adresse de source étant associée à un premier espace logique configuré pour stocker un bloc logique de données d'une première taille, et la première adresse de destination étant associée à un deuxième espace logique configuré pour stocker un bloc logique de données d'une deuxième taille différente de la première taille;
la génération, par un ou plusieurs processeurs (140) du dispositif de stockage (104), sur la base de la commande de copie, d'une première commande de lecture et d'une première commande d'écriture;
la soumission, par un ou plusieurs processeurs (140) du dispositif de stockage (104), de la première commande de lecture et de la première commande d'écriture à un deuxième contrôleur du dispositif de stockage (104) via une deuxième file (130);
la récupération et le traitement, par le deuxième contrôleur, de la première commande de lecture et de la première commande d'écriture en provenance de la deuxième file (130);
la lecture, par le deuxième contrôleur, sur la base du traitement de la première commande de lecture, des données stockées dans un premier emplacement d'un support de stockage du dispositif de stockage (104) associé à la première adresse de source;
l'écriture, par le second contrôleur, sur la base du traitement de la première commande d'écriture, des données dans un deuxième emplacement du support de stockage associé à la première adresse de destination; et
la transmission, par le premier contrôleur (124), d'un signal à l'hôte (102) pour indiquer l'achèvement de la commande de copie,
dans lequel les données stockées dans le premier emplacement du support de stockage comprennent des métadonnées (504) ayant une première partie (504a) et une deuxième partie (504b), dans lequel la deuxième partie (504b) des métadonnées (504) comprend des informations de protection de données, et dans lequel l'écriture des données comprend:
l'écriture de la première partie (504a) des métadonnées (504) à un troisième emplacement du support de stockage associé à la première adresse de destination;
la génération, par le dispositif de stockage (104), d'une troisième partie des métadonnées (504) sur la base de la taille des données du bloc logique de la première adresse de destination; et
l'écriture, par le dispositif de stockage (104), de la troisième partie des métadonnées (504) dans le support de stockage au lieu de la deuxième partie (504b) des métadonnées (504).

2. Procédé de la revendication 1, dans lequel la première adresse de source est associée au premier espace logique du dispositif de stockage (104) identifié par un premier identifiant, et la première adresse de destination est associée au deuxième espace logique du dispositif de stockage (104) identifié par un deuxième identifiant.

3. Procédé de la revendication 1 ou 2, dans lequel la commande de copie comprend une deuxième adresse de destination, dans lequel l'écriture des données comprend l'écriture d'une première partie des données au deuxième emplacement du support de stockage associé à la première adresse de destination, et l'écriture d'une deuxième partie des données à un troisième emplacement du support de stockage associé à la deuxième adresse de destination.

4. Procédé d'une quelconque des revendications 1 à 3, comprenant en outre:
sauter la lecture de la deuxième partie (504b) des métadonnées (504) sur la base du traitement de la première commande de lecture.

5. Procédé d'une quelconque des revendications 1 à 4, comprenant en outre:
le saut de l'écriture de la deuxième partie (504b) des métadonnées (504) sur la base du traitement de la première commande d'écriture.

6. Procédé d'une quelconque des revendications 1 à 5, dans lequel la commande de copie est associée à une deuxième adresse de source, le procédé comprenant en outre:
la génération, par le dispositif de stockage (104), sur la base de la commande de copie, d'une deuxième commande de lecture;
la soumission, par le dispositif de stockage (104), de la deuxième commande de lecture au deuxième contrôleur du dispositif de stockage (104) via la deuxième file (130);
la récupération et le traitement, par le deuxième contrôleur, de la deuxième commande de lecture à partir de la deuxième file (130); et
la lecture, par le dispositif de stockage (104), sur la base du traitement de la deuxième commande de lecture, des données stockées dans un troisième emplacement du dispositif de stockage (104) associé à la deuxième adresse de source,
dans lequel le traitement de la deuxième commande de lecture par le deuxième contrôleur et le traitement de la première commande d'écriture sont simultanés.

7. Procédé d'une quelconque des revendications 1 à 6, dans lequel le dispositif de stockage (104) est un dispositif de stockage non volatile (104), et le premier contrôleur (124) et le deuxième contrôleur adhèrent à un protocole de mémoire non volatile express, NVMe [non-volatile memory express].

8. Procédé d'une quelconque des revendications 1 à 7 comprenant en outre:
la soumission, par le deuxième contrôleur, d'un premier statut d'achèvement à une première file d'achèvement (132).

9. Procédé de la revendication 8, dans lequel la transmission du signal comprend la soumission d'un deuxième statut d'achèvement à une deuxième file d'achèvement (114) sur la base de la soumission du premier statut d'achèvement à la première file d'achèvement (132).

10. Dispositif de stockage (104) comprenant:
un support de stockage;
un ou plusieurs processeurs couplés au support de stockage, le ou les processeurs étant configurés pour respectivement:
recevoir, via un premier contrôleur (124) et une première file (112), une commande de copie en provenance d'un hôte (102), la commande de copie comprenant une première adresse de source et une première adresse de destination, la première adresse de source étant associée à un premier espace logique configuré pour stocker un bloc logique de données d'une première taille, et la première adresse de destination étant associée à un deuxième espace logique configuré pour stocker un bloc logique de données d'une deuxième taille différente de la première taille;
générer, sur la base de la commande de copie, une première commande de lecture et une première commande d'écriture;
soumettre la première commande de lecture et la première commande d'écriture à un deuxième contrôleur via une deuxième file (130);
récupérer et traiter, via le deuxième contrôleur, la première commande de lecture et la première commande d'écriture de la deuxième file (130);
lire, via le deuxième contrôleur, sur la base du traitement de la première commande de lecture, les données stockées dans un premier emplacement du support de stockage associé à la première adresse de source;
écrire, via le deuxième contrôleur, sur la base du traitement de la première commande d'écriture, les données dans un deuxième emplacement du support de stockage associé à la première adresse de destination; et
transmettre, via le premier contrôleur (124), un signal à l'hôte (102) pour indiquer l'achèvement de la commande de copie,
dans lequel les données stockées dans le premier emplacement du support de stockage comprennent des métadonnées (504) ayant une première partie (504a) et une deuxième partie (504b), dans lequel la deuxième partie (504b) des métadonnées (504) comprend des informations de protection de données, et dans lequel, lors de l'écriture des données, l'un ou les plusieurs processeurs sont en outre configurés pour:
écrire la première partie (504a) des métadonnées (504) à un troisième emplacement du support de stockage associé à la première adresse de destination;
générer une troisième partie des métadonnées (504) sur la base de la taille des données du bloc logique de la première adresse de destination; et
écrire la troisième partie des métadonnées (504) dans le support de stockage au lieu de la deuxième partie (504b) des métadonnées (504).

11. Dispositif de stockage (104) de la revendication 10, dans lequel la première adresse de source est associée au premier espace logique du dispositif de stockage (104) identifié par un premier identifiant, et la première adresse de destination est associée au deuxième espace logique du dispositif de stockage (104) identifié par un deuxième identifiant.

12. Dispositif de stockage (104) de la revendication 10 ou 11, dans lequel la commande de copie comprend une deuxième adresse de destination, dans lequel lors de l'écriture des données, le ou les processeurs sont configurés pour écrire une première partie des données au deuxième emplacement du support de stockage associé à la première adresse de destination, et écrire une deuxième partie des données à un troisième emplacement du support de stockage associé à la deuxième adresse de destination.

13. Dispositif de stockage (104) d'une quelconque des revendications 10 à 12, dans lequel le ou les processeurs sont en outre configurés pour:
sauter la lecture de la deuxième partie (504b) des métadonnées (504) sur la base du traitement de la première commande de lecture.

14. Dispositif de stockage (104) d'une quelconque des revendications 10 à 13, dans lequel le ou les processeurs sont en outre configurés pour:
sauter l'écriture de la deuxième partie (504b) des métadonnées (504) sur la base du traitement de la première commande d'écriture.
